# EUROPEAN PATENT APPLICATION

(11) **EP 4 411 670 A1**
(43) Date of publication of application: **07.08.2024**
(21) Application number: 23154924.7
(22) Date of filing: 03.02.2023
(51) Int. Cl.: G06V 10/774, G06V 20/70, G06V 20/56

(54) **DATA STRUCTURE FOR EFFICIENT TRAINING OF SEMANTIC SEGMENTATION MODELS**

(71) Applicant: Aptiv Technologies AG, 8200 Schaffhausen (CH)
(72) Inventor: HASECKE, Frederik Lenard, 42719 Solingen (DE); LUSZEK, Moritz, 32760 Detmold (DE)
(74) Representative: Bardehle Pagenberg Partnerschaft mbB Patentanwälte Rechtsanwälte

(57) **Abstract**

The present invention relates to a method for creating a data sample for training semantic segmentation models usable in a vehicle assistance system. The method comprising the steps of: obtaining a first point cloud representing a surrounding of a vehicle at a first point in time and a second point cloud representing the surrounding of the vehicle at a second point in time; joining the first and second point cloud to obtain a global point cloud representing the surrounding of the vehicle over a duration of the first point in time and the second point in time; creating a representation of the surrounding based on the global point cloud; extracting from the representation a semantic map and one or more elevation maps; and providing the semantic map and the one or more elevation maps as the data sample. In addition, a corresponding data structure for training semantic segmentation models, a method for training semantic segmentation models using the data structure, a semantic segmentation model as well as a corresponding computer program and apparatus is disclosed.

## Description

### Field of the invention

The present disclosure relates to a computer-implemented method for creating a data sample for training semantic segmentation models, a data structure created using the method, a method for training a semantic segmentation model using the data structure, a corresponding semantic segmentation model as well as a corresponding computer program and apparatus.

### Background

Apart from model architecture and hyper-parameter selection, one main criteria for training artificial neural networks is data engineering. As part of the latter, data quality (e.g., with respect to annotation/labeling) and data structure design are two important factors. One tradeoff which is to be optimized is between data complexity and computational complexity. While highly complex data structures may contain more information which may result in better training performance in terms of prediction accuracy, training a model using complex data structures is often highly expensive regarding computational resources. Another aspect regarding data quality is the extensive effort which has to be put into data annotation.

Accordingly, efforts have been made to automate annotation as far as possible to overcome the drawbacks of manual annotation. Regarding lidar or radar data, these approaches are often based on rasterizing the respective point clouds to a discrete grid pattern and assign the most frequent point label within a bin to the corresponding bin. However, these approaches are limited due to the nature of the input data (e.g., sparsity issues). Corresponding approaches which try to overcome these issues (e.g., using lidar data to train dense 2D grid maps from the sparse lidar input cloud) oftentimes introduce wrong labels, caused by the model predicting missing data. Given the safety requirements in scenarios such as autonomous driving, deploying such biased models is not applicable.

Against this background, an object of the present invention is to provide a data structure allowing efficient training of semantic segmentation models (e.g., with respect to computational effort, solving sparsity issues of input data etc.).

### Summary of the invention

Aspects of the present disclosure are set out in the accompanying independent and dependent claims. Combinations of features from the dependent claims may be combined with features of the independent claims as appropriate and not merely as explicitly set out in the claims.

An aspect of the present invention relates to a computer-implemented method for creating a data sample for training semantic segmentation models. The models may be usable in a vehicle assistance system. The method may comprise obtaining a first point cloud representing a surrounding of a vehicle at a first point in time and a second point cloud representing the surrounding of the vehicle at a second point in time; joining the first and second point cloud to obtain a global point cloud representing the surrounding of the vehicle over a duration of the first point in time and the second point in time; creating a representation of the surrounding based on the global point cloud; extracting from the representation a semantic map and one or more elevation maps; and providing the semantic map and the one or more elevation maps as the data sample.

The generated data sample overcomes natural limitations of point cloud sensors (e.g., lidar, radar etc.) such as sparsity while at the same time being efficient with respect to processing (i.e., low computational costs).

In a further aspect, extracting the semantic map and/or the one or more elevation maps comprises capturing a first view of the representation indicating elevation information from above the vehicle to create a first elevation map; and/or capturing a second view of the representation indicating elevation information from below the vehicle to create a second elevation map; and/or capturing a third view of the representation indicating semantic information of the surrounding to create the semantic map.

The created representation provides a way to extract information (e.g., semantic, elevation etc.) in an efficient manner. Accordingly, based on the application the respective model is intended to be trained for, corresponding views of the representation may be captured.

In a further aspect, the elevation information from above the vehicle comprises distance information of objects within the representation relative from above the agent; and/or wherein the elevation information from below the vehicle comprises distance information of objects within the representation relative from below the vehicle.

Combining a semantic map with two elevation maps wherein each elevation map covers distance information from above and from below the vehicle respectively, a pseudo representation is created which covers most of the relevant information of the representation (e.g., underneath regions such as bridges, trees, signs on highways, tunnels). This way, information content of the pseudo representation is nearly as high than the information content of the representation, while being more efficient with respect to computation.

In a further aspect, the method further comprises determining a first plurality of labeled points associated with static objects within the surrounding of the vehicle at the first point in time in the first point cloud and/or a second plurality of labeled points associated with dynamic objects within the surrounding of the vehicle at the first point in time in the first point cloud; and determining a third plurality of labeled points associated with static objects within the surrounding of the vehicle at the second point in time in the second point cloud and/or a fourth plurality of labeled points associated with dynamic objects within the surrounding of the vehicle at the second point in time in the second point cloud. In this aspect, joining the first point cloud and the second point cloud comprises joining the first plurality of labeled points and the third plurality of labeled points.

Separating the static (e.g., houses, road surfaces, poles, parked cars etc.) from the dynamic objects (e.g., pedestrians, moving cars, bicycles, trucks etc.) and using merely the points associated with the static objects for joining and thus creating the global point cloud avoids inaccuracies (e.g., blurring caused by other moving vehicles).

In a further aspect, determining the first plurality of labeled points and/or the second plurality of labeled points within the first point cloud comprises: classifying each point of the first point cloud as static or dynamic; adding each point classified as static to the first plurality of labeled points; and/or adding each point classified as dynamic to the second plurality of labeled points. Additionally, or alternatively, determining the third plurality of labeled points and/or the fourth plurality of labeled points within the second point cloud comprises: classifying each point of the second point cloud as static or dynamic; adding each point classified as static to the third plurality of labeled points; and/or adding each point classified as dynamic to the fourth plurality of labeled points.

Classifying each point of the first and/or second point cloud as either static or dynamic (i.e., as either being associated with a static or dynamic object) represents a highly accurate way of separating the dynamic and static objects resulting in an accurate creation of the global point cloud. Classification of the points may be done using one or more segmentation networks.

In a further aspect, determining the first plurality of labeled points and/or the second plurality of labeled points comprises: generating bounding box annotations for the static objects associated with the first plurality of labeled points; and/or generating bounding box annotations for the dynamic objects associated with the second plurality of labeled points. Additionally or alternatively, determining the third plurality of labeled points and/or the fourth plurality of labeled points comprises: generating bounding box annotations for the static objects associated with the third plurality of labeled points; and/or generating bounding box annotations for the dynamic objects associated with the fourth plurality of labeled points.

Using additional information (i.e., the bounding box annotations) results in an increased accuracy of the separation of dynamic and static objects. The bounding box annotations may be generated using one or more (i.e., ensemble) of respective detection networks. A respective common tracker may be used to address the temporal aspects between the respective point clouds.

In a further aspect, creating the representation comprises reconstructing a surface comprising a plurality of vertices from the global point cloud.

Creating a representation of the global point cloud by reconstructing a surface improves coverage of the (static) surrounding/environment of the vehicle. This is important, because there may still be uncovered areas in the global point cloud which when being discretized (e.g., using voxelization) cannot accurately represent the actual surrounding. By reconstructing a surface (e.g., using a Poisson Surface Reconstruction or other suitable models to create a surface from a point cloud) a 3D object (e.g., mesh object) is created which also covers these previously uncovered areas.

In a further aspect, the method further comprises determining for each vertex of the plurality of vertices of the surface a predefined number of references points from the global point cloud; determining a label for each reference point of the predefined number of reference points; and labeling each vertex of the plurality of vertices according to the labels of the respective predefined number of reference points.

Labeling the vertices of the reconstructed surface introduces semantic information to the newly covered areas which where previously uncovered. Basing this decision on a comparison with reference points from the global point cloud (e.g., neighbor points) increases the likelihood of correct labeling of the respective vertex. This may be done using a k-nearest neighbor algorithm in which k represent the predefined number. The predefined number may be 10.

In a further aspect, labeling a vertex of the plurality of vertices according to the labels of the respective predefined number of reference points comprises: determining a label of the vertex based on a label distribution within the respective predefined number of references points; and/or wherein each label of the label distribution is associated with a weight factor.

Determining the label of the vertex based on a label distribution increases the likelihood of correct labeling. For example, the label distribution may indicate a frequency of labels of the respective predefined number of reference points. In an example, where the predefined number of reference points is 10, 7 reference points may indicate the label of "Road" and 3 may indicate the label of "Guardrail". Accordingly, the respective vertex may be labeled as "Road". However, it may also be possible that classes/labels are associated with corresponding weight factor. This is because, some classes are being considered as more important than others. For example, "Guardrail" may be more important than "Road". For example, the weight factor for "Guardrail" may be 3 and the weight factor for "Road" 1. As a result, in the above example, the vertex may be labeled as "Guardrail" (3 reference points * weight factor 3 = 9, which is larger than 7 reference points * weight factor 1 = 7).

In a further aspect, joining the first point cloud and the second point cloud comprises estimating an ego motion of the vehicle within the surrounding between the first point in time and the second point in time; and wherein joining the first point cloud and the second point cloud is based on the estimated ego motion.

Joining the first- and second-point clouds based on the estimated ego motion increases the accuracy of the joined (i.e., global) point cloud.

Another aspect relates to a data structure for training semantic segmentation models, wherein the data structure is created using the method as outlined above.

Another aspect relates to a method for training a semantic segmentation model using the above-described data structure for the training of the semantic segmentation model.

Another aspect relates to a semantic segmentation mode trained according to the method as outlined above.

Another aspect of the invention relates to a computer program comprising instructions, which when executed by a computer, causes the computer to perform the method for creating a data sample as described above and/or the method for training a semantic segmentation model as described above; and/or causes the computer to process the data structure as described above and/or causes the computer to execute the semantic segmentation model as described above.

Another aspect, relates to an apparatus, preferably arranged in a vehicle, the apparatus comprising the above-described semantic segmentation model.

Yet another aspect of the invention relates to a vehicle comprising the aforementioned apparatus.

### Brief description of the drawings

Various aspects of the present invention are described in more detail in the following by reference to the accompanying figures without the present invention being limited to the embodiments of these figures.
- Fig. 1: depicts a traffic scenario used for describing aspects of the present invention.
- Fig. 2: illustrates a point cloud according to aspects of the present invention.
- Fig. 3: illustrates a global point cloud according to aspects of the present invention.
- Fig. 4: illustrates a representation created based on a global point cloud according to aspects of the present invention.
- Fig. 5: illustrates a semantic map, a first elevation map and a second elevation map according to aspects of the present invention.

### Detailed description

In the following, aspects of the present invention are described in more detail.

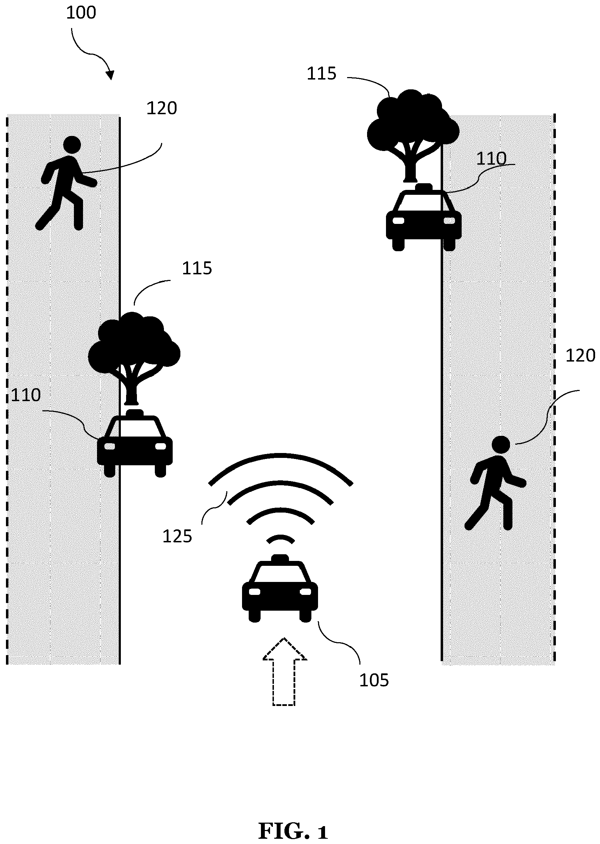

Fig. 1 depicts a traffic scenario 100 comprising an ego vehicle 105 on a road with road boundaries (indicated by the black vertical lines extending from top to bottom) and two parking vehicles 110. The intended driving direction of the vehicle 105 is indicated by the dashed arrow. Vehicle 105 may be equipped with sensors (e.g., radar, LiDAR etc.) observing and measuring a surrounding of the vehicle 105 as indicated by the signal waves 125. The surrounding of the vehicle 105 may further comprise trees 115 as well as a right and left pavement on which pedestrians 120 may walk. The sensor data including the information about the surrounding may be used for further processing according to the methods of the present invention. For example, the sensor data collected this way may be processed and transformed into a data structure according to aspects of the present invention. Using this data structure, a respective (semantic segmentation) model may be trained. Said model may be deployed on the vehicle 105 to process sensor data of similar kind as part of respective advanced driving assistance systems (e.g., autonomous driving, parking assistance, break assistance or the like).

The vehicle 105 may collect respective sensor data over a certain time period (i.e., a certain amount of time/ point in times). At each point in time, the vehicle may thus collect a corresponding point cloud. For example, a first point cloud representing the surrounding of the vehicle 105 at a first point in time and a second point cloud of the surrounding of the vehicle 105 at a second point in time may be obtained. A single point cloud (e.g., the first or the second point cloud) may not contain enough information about the surrounding of the vehicle 105 due to sensor limitations (e.g., a sensor 125 of the vehicle 105 may at a certain point in time not see as far as the parked vehicle 110 on the right-hand side if the vehicle 110 is for example more than 100m away). In addition, a single point cloud may suffer from occlusions (e.g., the pedestrian 120 on the left would be invisible to the vehicle 105 due to occlusions from the tree 115 and/or the vehicle 110). Accordingly, there is a need to gather more knowledge about the surrounding of the vehicle in the scenario 100.

Therefore, to obtain a denser point cloud (i.e., higher data quality) the first and the second point cloud may be joined to obtain a global point cloud representing the surrounding of the vehicle 105 over a duration of the first point in time and the second point in time. In order to further increase the coverage of the surrounding, a representation (e.g., 3D mesh object) of the surrounding may be created based on the global point cloud. From said representation, a semantic map and/or on or more elevation maps may be extracted. Finally, the extracted semantic and/or one or more elevation maps may be provided as a data structure/sample for training corresponding semantic segmentation models.

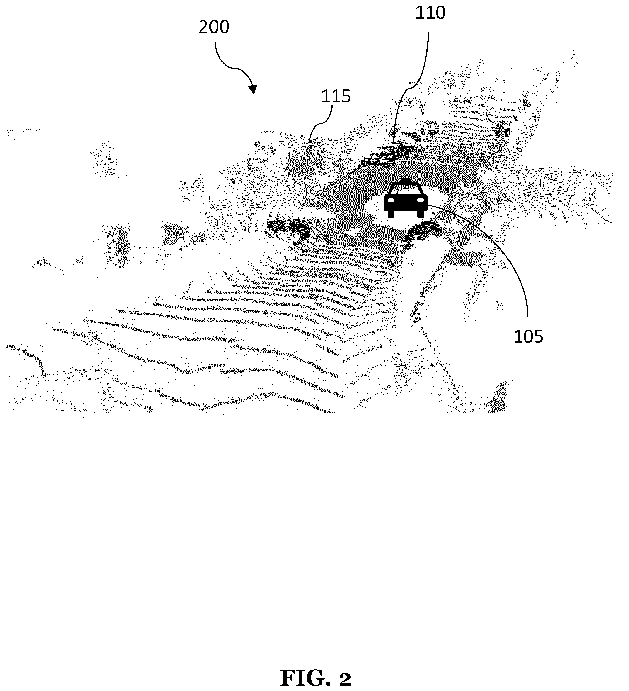

Fig. 2 illustrates a point (e.g., a first or second) cloud 200 according to aspects of the present invention. In the following the example will be explained with respect to a first point cloud according to aspects of the present invention. It is to be understood, that the example and description can also be applied to further point clouds such as the second point cloud according to aspects of the present invention.

The illustrated point cloud 200 may be obtained using respective sensors 125 of the vehicle 105. The illustrated point cloud 200 may represent the surrounding of the vehicle 105 at a given point in time. The point cloud 200 may comprise a first plurality of points associated with static objects (e.g., tree 115, parking vehicle 110 etc.) and a second plurality of points associated with dynamic objects (e.g., pedestrians 120). However, in the present example, the second plurality of labeled points may already be separated. As a result, only the first plurality of labeled points which are associated with static objects are maintained to be later used for joining to create a global point cloud.

Determining (in order to label the respective points and/or separation of static and dynamic points) the first and/or second plurality of labeled points, each point of the first point cloud 200 may be classified as either static or dynamic and added to the respective first or second plurality of labeled points. Additionally or alternatively, bounding box annotations for the static and/or dynamic objects may be generated based on which the respective points (i.e., the points being part of the respective bounding box) are added to either the first or the second plurality of labeled points.

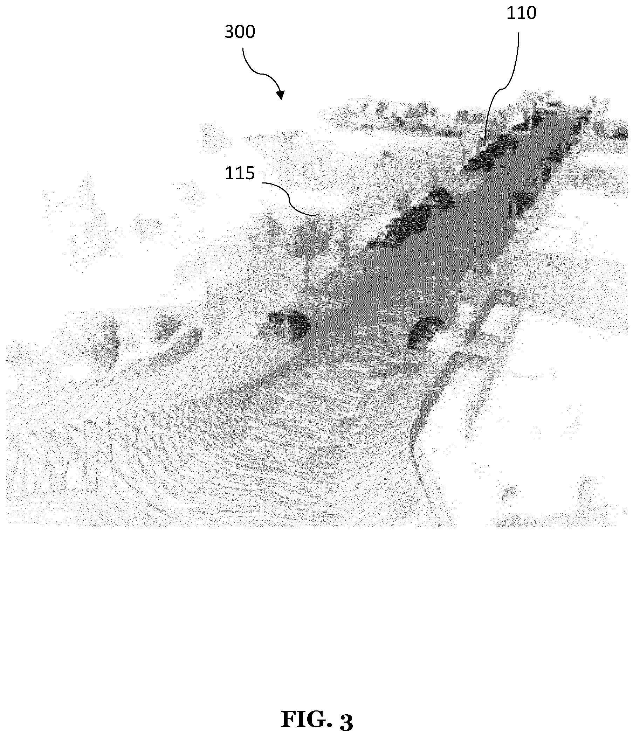

Fig. 3 illustrates a global point cloud 300 according to aspects of the present invention. The global point cloud may be obtained by joining a first and second point cloud 200 as described with respect to Fig. 2. As one can see, the global point cloud comprises way less uncovered areas and a higher density of points compared to the point cloud 200 of Fig. 2. This is because available spatial information is combined/joined over a duration of time. This way, temporal deficiencies within the point clouds as well as technical restrains such as range of sensors can be overcome.

Joining the first and second point cloud 200 to obtain the global point cloud 300 may comprise estimating an ego motion of the vehicle 105 within the surrounding between the first point in time and the second point in time of the respective first and second point cloud, wherein the joining may be based on the estimated ego motion. The ego motion may be estimated using a combination of a simultaneous localization and mapping (SLAM) method (e.g., lidar based) with additionally recorded (movement) information of the ego vehicle 105 such as speed and yaw rate. Accordingly, generating the ego motion may be based on a first data stream of the vehicle 105 moving through the surrounding and a second data stream of the vehicle 105 moving through the surrounding. The first data stream may be generated using SLAM and the second data stream may be generated using the recorded information of vehicle 105. Accordingly, both data streams may indicate an estimated change of position and/or rotation of the vehicle. Based on a comparison between both data streams, a precise position change of the vehicle may be determined. Using this precise position change, the first and second point clouds 200 may then be accurately joined (i.e., temporally aligned) to obtain the global point cloud 300. A possible implementation of said ego motion estimation is explained in detail in European patent application EP4024005 A1.

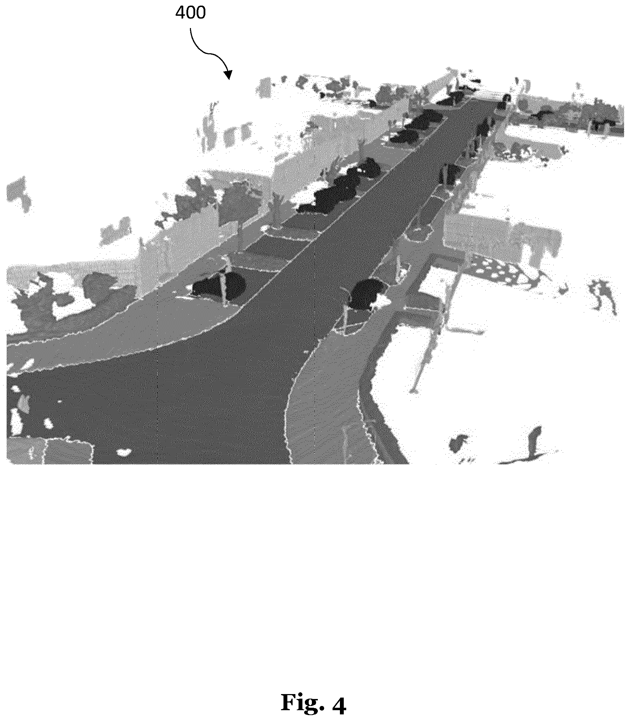

Fig. 4 illustrates a representation 400 created based on a global point cloud 300 according to aspects of the present invention. The representation may be created by reconstructing a surface from the global point clouds. As can be seen, the representation 400 compared to the global point cloud 300 has hardly any uncovered areas. This is due to the surface reconstruction which as a result introduces a plurality of vertices which covers these previously uncovered areas. In order to also fill these gaps with semantic information, a predefined number of reference points from the global point cloud 300 is determined for each vertex of the plurality of vertices of the surface. A label may be determined for each reference point of the predefined number of reference points and each vertex may then be labeled according to the labels of the respective predefined number of reference points. Thereby, labeling a vertex of the plurality of vertices according to the labels of the respective predefined number of reference points may comprise determining a label of the vertex based on a label distribution. In addition, each label of the label distribution may be associated with a respective weight factor influencing the distribution.

Reconstructing the surface may done using a Poisson Surface Reconstruction algorithm or other suitable methods. The representation 400 comprising the plurality of vertices may be a mesh object (e.g., 3D). It may also be possible that once the representation 400 is created, additional points such as the points associated with dynamic objects are transferred/incorporated into the representation 400 based on the movement of the dynamic objects(e.g., based on a given time the dynamic object and/or the respective bounding box may be included into the representation 400 at the respective position of the object at that given time). Recombining a (in this case static) representation with dynamic objects/bounding boxes may further increase the (spatial) information content of the representation over a given temporal course (e.g., the recorded time period of the surrounding).

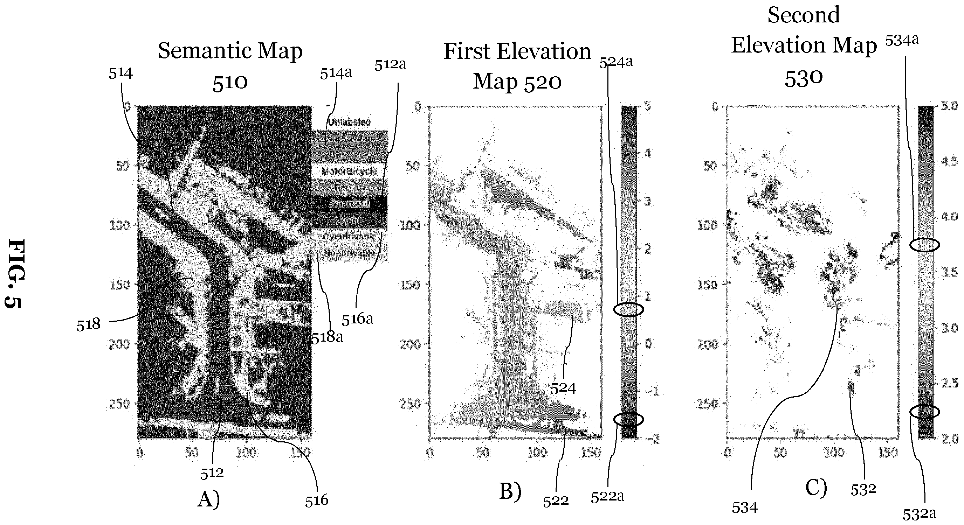

Fig. 5 illustrates a semantic map 510, a first elevation map 520 and a second elevation map 530 extracted from the representation 400 according to aspects of the present invention. While the representation 400 represents a holistic version of the world/surrounding of the vehicle, training a model using the representation 400 may be too expensive regarding computational costs. Accordingly, the representation 400 is reduced to a pseudo representation, namely by extracting the respective maps and to create the data sample/structure according to aspects of the present invention.

In the given example, the semantic map 510 may be extracted from the representation 400 as shown in section A) of Fig. 5. As one can see, the semantic map 510 represents a bird's-eye view of the representation 400. The semantic map 510 may comprise all relevant semantic information such as labels/classes of objects within the surrounding of the vehicle 105. For example, the semantic map 510 comprises a CarSuvVan (Car, SUV, Van) object 514, a road 512, an over drivable area 516 and a non over drivable area 516. For illustration purposes, a legend is attached to the semantic map indicating the respective labels 512a, 514a, 516a and 518a of the objects/areas within the semantic map 510. The semantic map 510 may be created by capturing a respective view of the representation 400 (e.g., within a visualization engine which renders the representation 400 and in which a virtual camera captures the view).

In the given example, in addition to the semantic map 510, also the first elevation map 520 may be extracted from the representation 400 as shown in section B) of Fig.5. As one can see, the first elevation map 520 represents a bird's eye view of the representation 400. The first elevation map 520 may be created by capturing a respective view of the representation 400 from above the vehicle 105 (e.g., within a visualization engine which renders the representation 400 and in which a virtual camera captures the view from above the vehicle 105). Thus, the first elevation map 520 may indicate elevation information from above the vehicle 105. Said elevation information may include distance information of objects within the representation 400 relative from above the vehicle. Said distance information is visualized in section B) using a scale, wherein the height of an object is indicated by a color code according to the scale. For example, object/area 522 of the first elevation map 520 may correspond to the height indicated by section 522a of the scale and object/area 524 of the first elevation map 520 may correspond to the height indicated by section 524a of the scale. This information may be determined by calculating the respective distance from a position of the virtual camera to each respective part of the representation 400.

In the given example, in addition to the semantic map 510 and the first elevation map 520, second elevation map 520 may also be extracted from the representation 400 as shown in section C) of Fig. 5. As one can see, the second elevation map 530 represents a worm's eye view of the representation 400. The second elevation map 520 may be created by capturing a respective view of the representation 400 from below the vehicle 105 (e.g., within a visualization engine which renders the representation 400 and in which a virtual camera captures the view from below the vehicle 105). Thus, the second elevation map 530 may indicate elevation information from below the vehicle 105. Said elevation information may include distance information of objects within the representation 400 relative from below the vehicle. Said distance information is visualized in section C) using a scale, wherein objects far above the vehicle 105 are colored different than objects rather low above the vehicle 105. For example, object 532 may be rather low above the vehicle 105 and is thus colored with the respective color code indicated by section 532a of the scale, while object 534 may be rather far above the vehicle 105 and is thus colored with the respective color code indicated by section 543a of the scale. This information may be determined by calculating the respective distance from a position of the virtual camera to each respective part of the representation 400.

It is to be understood, that the illustrated scales and color codes are merely used for illustration purpose and are not necessarily part of the created data sample/structure.

By reducing the complex representation 400 (e.g., in 3D) to the respective semantic map 510 (e.g., in 2D) as well as to the one or more (in this example first 520 and second 530) elevation maps (e.g., each being 2.5D) processing in terms of complexity and computation costs is reduced while at the same time information loss is avoided. Thus, when providing the semantic map 510 and the one or more elevation maps 510,520 as a data sample for training a respective model, good performance with respect to prediction quality as well as computational effort can be expected.

The method(s) according to the present invention may be implemented in terms of a computer program which may be executed on any suitable data processing device comprising means (e.g., a memory and one or more processors operatively coupled to the memory) being configured accordingly. The computer program may be stored as computer-executable instructions on a non-transitory computer-readable medium.

Embodiments of the present disclosure may be realized in any of various forms. For example, in some embodiments, the present invention may be realized as a computer-implemented method, a computer-readable memory medium, or a computer system.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. In particular, with reference to the appended claims, features from dependent claims may be combined with those of the independent claims and features from respective independent claims may be combined in any appropriate manner and not merely in the specific combinations enumerated in the appended claims.

## Claims

1. A computer-implemented method for creating a data sample for training semantic segmentation models usable in a vehicle assistance system, the method comprising:
obtaining a first point cloud (200) representing a surrounding of a vehicle (105) at a first point in time and a second point cloud (200) representing the surrounding of the vehicle (105) at a second point in time;
joining the first and second point cloud (200) to obtain a global point cloud (300) representing the surrounding of the vehicle (105) over a duration of the first point in time and the second point in time;
creating a representation (400) of the surrounding based on the global point cloud (300);
extracting from the representation (400) a semantic map (510) and one or more elevation maps (520, 530); and
providing the semantic map (510) and the one or more elevation maps (520, 530) as the data sample.

2. The method of claim 1, wherein extracting the semantic map and/or the one or more elevation maps comprises:
capturing a first view of the representation indicating elevation information from above the vehicle to create a first elevation map; and/or
capturing a second view of the representation indicating elevation information from below the vehicle to create a second elevation map; and/or
capturing a third view of the representation indicating semantic information of the surrounding to create the semantic map.

3. The method of claim 2, wherein the elevation information from above the vehicle comprises distance information of objects within the representation relative from above the vehicle; and/or
wherein the elevation information from below the vehicle comprises distance information of objects within the representation relative from below the vehicle.

4. The method of any one of the claims 1 to 3, wherein the method further comprises:
determining a first plurality of labeled points associated with static objects within the surrounding of the vehicle at the first point in time in the first point cloud; and
determining a third plurality of labeled points associated with static objects within the surrounding of the vehicle at the second point in time in the second point cloud; and
wherein joining the first point cloud and the second point cloud comprises:
joining the first plurality of labeled points and the third plurality of labeled points.

5. The method of claim 4, wherein determining the first and/or the third plurality of labeled points within the first and/or second point cloud comprises:
classifying each point of the first and/or the second point cloud as static or dynamic; and
adding each point classified as static to the first and/or the third plurality of labeled points.

6. The method of any one of claims 4 to 5, wherein determining the first and/or third plurality of labeled points comprises:
generating bounding box annotations for the static objects associated with the first and/or third plurality of labeled points.

7. The method of any one of the claims 1 to 6, wherein creating the representation comprises reconstructing a surface comprising a plurality of vertices from the global point cloud.

8. The method of claim 7, further comprising
determining for each vertex of the plurality of vertices of the surface a predefined number of reference points from the global point cloud;
determining a label for each reference point of the predefined number of reference points; and
labeling each vertex of the plurality of vertices according to the labels of the respective predefined number of reference points.

9. The method of claim 8, wherein labeling a vertex of the plurality of vertices according to the labels of the respective predefined number of reference points comprises:
determining a label of the vertex based on a label distribution within the respective predefined number of reference points; and/or
wherein each label of the label distribution is associated with a weight factor.

10. The method of any one of the claims 1 to 9, wherein joining the first point cloud and the second point cloud comprises:
estimating an ego motion of the vehicle within the surround between the first point in time and the second point in time; and
wherein joining the first point cloud and the second point cloud is based on the estimated ego motion.

11. A data structure for training semantic segmentation models, wherein the data structure is created using the method of any one of the claims 1 to 10.

12. A method for training a semantic segmentation model using the data structure of claim 11 for the training of the semantic segmentation model.

13. A semantic segmentation model trained according to the method of claim 12.

14. A computer program comprising instructions, which when executed by a computer, causes the computer to perform the method of any one of the claims 1 to 10 and/or 12; and/or causes the computer to process the data structure of claim 11; and/or causes the computer to execute the semantic segmentation model according to claim 13.

15. An apparatus, preferably arranged in a vehicle, the apparatus comprising the semantic segmentation model according to claim 13.
